(19) Europäisches Patentamt
European Patent Office
Office européen des brevets

(11) **EP 2 261 072 B1**

(12) **EUROPEAN PATENT SPECIFICATION**

(45) Date of publication and mention
of the grant of the patent:
**31.10.2012 Bulletin 2012/44**

(51) Int Cl.:
***B60K 28/16*** *(2006.01)*

(21) Application number: **10163916.9**

(22) Date of filing: **26.05.2010**

(54) **System and method for controlling traction in a two-wheeled vehicle**

Verfahren und Vorrichtung zur Regelung des Antriebs eines Zweiradfahrzeugs

Système et dispositif pour régler la traction d'un véhicule à deux roues

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **09.06.2009 IT MI20091013**

(43) Date of publication of application:
**15.12.2010 Bulletin 2010/50**

(73) Proprietor: **PIAGGIO & C. S.p.A.**
**56025 Pontedera (Pisa) (IT)**

(72) Inventors:
• **Savaresi, Sergio Matteo**
**26100 Cremona (IT)**
• **Corno, Matteo**
**20040 Bellusco (MI) (IT)**
• **Formentin, Simone**
**20010 San Giorgio Su Legnano (MI) (IT)**
• **Fabbri, Luca**
**30036 Santa Maria di Sala (VE) (IT)**

(74) Representative: **Carangelo, Pierluigi et al**
**Jacobacci & Partners S.p.A.**
**Via Senato, 8**
**20121 Milano (IT)**

(56) References cited:
**DE-A1- 3 337 155**

## Description

The present invention refers to a system and to a method for controlling the traction in a two-wheeled vehicle.

In vehicles in general, and in particular in two-wheeled vehicles or motor vehicles, the control of the traction is carried out by controlling the slip of the drive wheels during acceleration, in a way such as to ensure good road-holding qualities and to thus improve the safety and driving conditions of the vehicle itself.

In particular, a non-zero longitudinal slip level is necessary in order to give traction in the direction of movement of the vehicle.

However, when a vehicle has to deal with a curve, having a non zero longitudinal slip value causes a reduction of the lateral force that the tyre can exert. This effect is particularly critical in two-wheeled vehicles in which the lateral force exerted by the tyres not only allows the vehicle to complete the curve, but it also stabilises the roll dynamic. Therefore, in a motor vehicle, there are opposite slip necessities according to whether it is running on a straight or about to tackle a curve.

A first known solution for controlling the traction in motor vehicles promotes safety by limiting the level of slip of the drive wheel irrespective of the instantaneous lean conditions.

Such a method carries out a closed loop control which estimates the instantaneous slip value based upon instantaneous measuring values, and adjusts the torque delivered by the motor of the vehicle so as to keep the instantaneous slip value below a limit value.

In order to ensure a high level of lateral adhesion for each lean condition, in such a known approach the limit slip level is chosen in a conservative manner.

The conservative choice of the limit slip value, however, leads to a lower performance when the motor vehicle is in those conditions in which a slip level greater than that of the limit would offer a greater traction and therefore a greater acceleration without bringing the vehicle into an unstable condition.

A second known method for controlling the traction in motor vehicles is applied to racing vehicles. Such systems are designed and calibrated to ensure the maximum performances on known tracks. They are thus focused on the performance aspects and are not developed to ensure sturdiness when facing variable adhesion conditions. Such systems are thus difficult to apply onto production vehicles.

In the known closed loop control methods, the estimation of the instantaneous slip value is usually carried out in an approximate manner by simply equalling it to the difference between the rotational speed of the front and rear wheels.

In such a way, without taking into account further different parameters which affect the instantaneous slip, the control is based upon an imprecise feedback value, and is therefore not very reliable since possible imprecisions in the feedback value lead to an equally imprecise reaction of the system.

Moreover, the closed loop systems, even though they can ensure greater sturdiness, are generally slower at responding to the reference variations with respect to feedforward control systems.

Finally, a feedforward method for controlling the traction is known that adjusts the torque delivered by the motor, and consequently the instantaneous slip, based upon some known input parameters, such as the revs of the motor, the inserted gear, the position of the throttle valve and so on.

Such a method for controlling, not being based upon the adjustment of the feedback of the instantaneous slip, is not able to adapt to the instantaneous conditions of the driving surface and of the vehicle, like for example the adhesion offered by the road surface or the wear condition of the tyres, and therefore can only be used in competitive contexts where it is possible to map and describe with a high level of detail each single manoeuvre of the track.

**< Document** DE 33 37 155 A1 **discloses a method for controlling traction in a two-wheeled vehicle according to the preamble of claim 1. >**

The purpose of the present invention is that of avoiding the aforementioned drawbacks and in particular that of devising a method for controlling traction in a two-wheeled vehicle that is able to ensure a good level of stability of the vehicle whilst offering the best performances possible to be achieved dependent upon the particular driving condition.

Another purpose of the present invention is that of providing a method for controlling traction in a two-wheeled vehicle which is able to estimate the instantaneous slip value of the motor vehicle in a precise manner, achieving in such a way a more sturdy control.

A further purpose of the present invention is that of devising a method for controlling traction in a two-wheeled vehicle which is able to adapt to the instantaneous conditions of the vehicle and of the road surface, without however renouncing a rapid system reaction.

The last but not least purpose of the present invention is that of making a system for controlling the traction in a two-wheeled vehicle which is able to implement the method for controlling according to the invention. These and other purposes according to the present invention are achieved by making a system and a method for controlling traction in a two-wheeled vehicle as outlined in the independent claims.

Further characteristics of the system and of the method for controlling traction in a two-wheeled vehicle are object of the dependent claims.

The characteristics and the advantages of a system and of a method for controlling traction in a two-wheeled vehicle according to the present invention shall become clearer from the following description, given as an example and not for limiting purposes, with reference to the attached schematic drawings, in which:

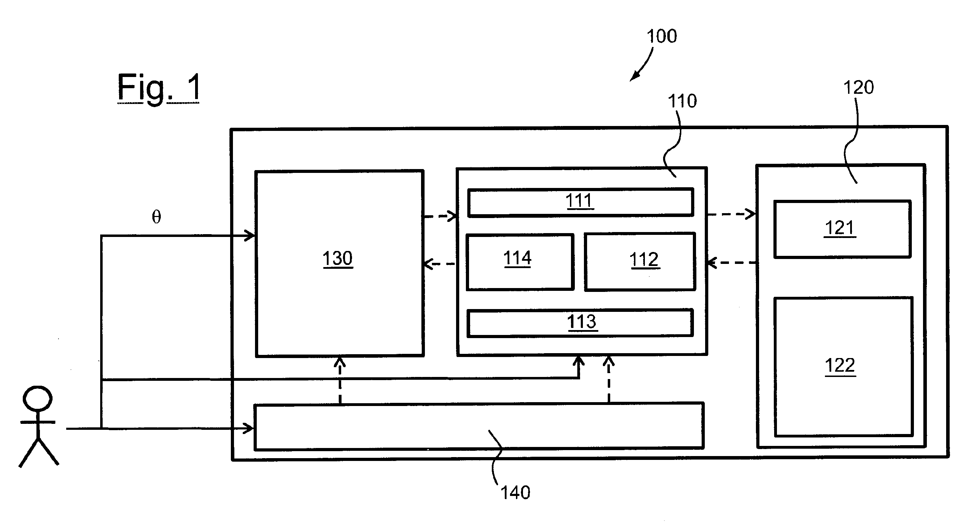

- figure 1 is a schematic representation of the system for controlling implementing the method for controlling traction in a two-wheeled vehicle according to the present invention;

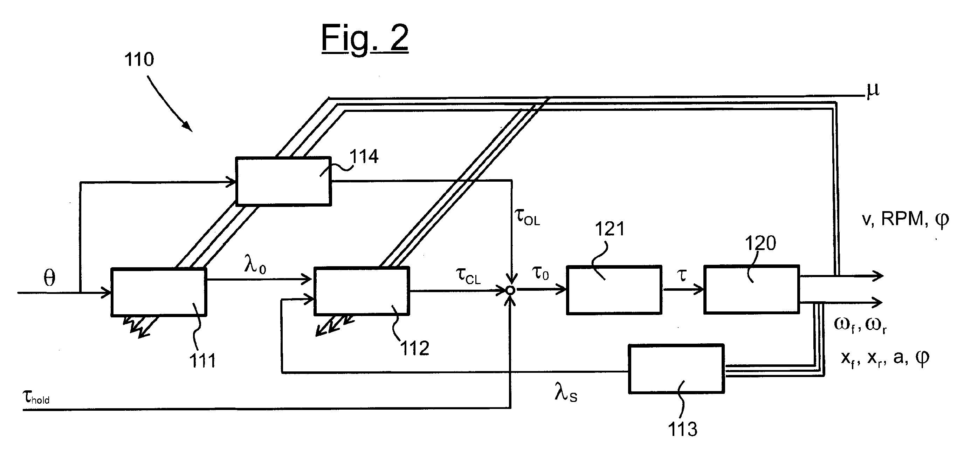

- figure 2 is a block diagram which represents the method for controlling traction in a two-wheeled vehicle according to the present invention;
- figures 3a and 3b are a schematic representation of the possible maps of thresholds used in the method for controlling traction in a two-wheeled vehicle according to the present invention;
- figure 4 is a graph representing a possible embodiment of the generator of a reference slip used in the method for controlling traction in a two-wheeled vehicle according to the present invention.

With reference to the figures, a system for controlling traction in a two-wheeled vehicle, is shown, wholly indicated with reference numeral 100.

The system for controlling the traction 100 comprises a control block 110 coupled with a motor 121 of a two-wheeled vehicle 120, in which the motor 121 can be torque controlled, i.e. able to deliver an instantaneous torque $\tau$ requested by the system 100.

In particular, the adjustment of the requested torque is generally obtained by varying the ignition advance of every cylinder, or, preferably, through the electronic control of the throttle valve so as to be able to exploit the entire torque range that the motor 121 is able to generate, or even by combining the two methods.

In vehicles with a motor 121 in which the torque can be controlled, a system for controlling the motor (not illustrated) is foreseen that translates the request of a user carried out through the accelerator, in a reference torque $\tau$. The translation is carried out by means of maps which relate the position of the accelerator, the gear inserted and the number of revs of the motor to the torque $\tau$ requested to the system for controlling the motor 121.

When the control block 110 of the system for controlling the traction 100 according to the present invention is active, it determines the instantaneous torque necessary for such a system 100 providing, as an input to the motor 121, a corresponding signal $\tau_0$ that replaces the reference torque normally generated by the conventional system for controlling the motor.

It is also foreseen for there to be a plurality of sensors 122 suitable for offering, to the control block 110, driving parameter measurements of the motor vehicle 120, amongst which a measurement based upon which the instantaneous rolling angle $\phi$ of the vehicle can be determined.

In order to determine the instantaneous rolling angle $\phi$, the sensors 122 can comprise, for example, a meter for measuring the distance from the ground at the two sides of the vehicle 120 from which it is possible to derive a direct measurement of the rolling angle $\phi$, or an accelerometer or a rate gyro able to provide measurements based upon which the instantaneous rolling angle

$\phi$ can be estimated, like for example as described in the Italian patent application number MI2007A000559. According to the present invention, the control block 110 comprises a reference generator 111 connected as an input to a torque request source expressed dependent upon the gear inserted and upon the motor speed expressed in terms of number of motor revs RPM, through a parameter $\theta$ representative of a torque request, like for example the angular position of the accelerator or of the throttle valve.

Hereafter, a reference to the angular position of the accelerator or of the throttle valve should be understood to be a non limiting example representation of the parameter $\theta$ representative of a torque request. Based upon the parameter $\theta$ representative of an instantaneous torque request, of the speed v and of the rolling angle $\phi$ at which the vehicle is running, determined by means of the sensors 122, the reference generator 111 provides, as an input to a closed loop controller 112, a reference slip value $\lambda_0$ which is compared with an instantaneous slip value $\lambda_s$ estimated by means of a slip reconstructor 113.

Based upon the difference between the reference slip value $\lambda_0$ and the instantaneous slip value $\lambda_s$, the closed loop controller 112 determines a first component $\tau_{CL}$ of the signal $\tau_0$ corresponding to the instantaneous torque requested to the motor 121.

Moreover, a feedforward controller 114 is preferably foreseen, which determines a second component $\tau_{OL}$ of the signal $\tau_0$ corresponding to the instantaneous torque requested to the motor 121 based upon the instantaneous conditions of the vehicle 120 such as its speed v, the rolling angle $\phi$, the motor speed expressed in terms of number of motor revs RPM and so on, in addition to the angular position $\theta$ of the accelerator or of the throttle valve.

Such measurements are detected by means of the plurality of sensors 122 foreseen on the motor vehicle 120.

The combined action of the closed loop controller 112 and of the feedforward controller 114 is mixed through a suitable variable mixing factor $\mu$ dependent upon the speed v and the rolling angle $\phi$ at which the motor vehicle is running, so as to ensure a greater promptness of the response of the system or, *vice versa,* a greater adaptability to the variations of the conditions of the vehicle or of the road.

The system for controlling the traction 100 also preferably comprises a supervision block 130 that manages the activation of the control block 110 as a function of the instantaneous slip $\lambda_s$ and of the variation speed of the angular position $\theta$ of the accelerator or of the throttle valve.

Finally it is preferably foreseen for there to be a user interface 140 comprising a plurality of selectors that allow a user to set the managing parameters of the control block 110.

In particular, the activation thresholds of the control block 110 can be selected, i.e. specifically, the slip $\lambda$ or the variation speed of the angular position $\theta$ of the accelerator or of the throttle valve as a function of the speed of the vehicle v and of the rolling angle $\varphi$.

The user interface 140 is also used to select further parameters such as, for example, the mixing parameter $\mu$, and to display the current selections, possibly showing the dependencies of some parameters, like for example the dependence of the mixing parameter $\varphi$ on the speed of the vehicle v and on the rolling angle $\varphi$.

The operation of the system for controlling the traction 100 in a two-wheeled vehicle is the following.

The control block 100 intervenes only when there are certain conditions that indicate the need for a control of the traction like for example a loss of traction of the rear wheel.

For such a purpose, beyond a predetermined speed v, the supervision block 130 places the control block 110 in a condition of potentially being able to intervene in the case in which certain activation conditions have occurred.

In particular, two alternative activation conditions are used, beyond which the control block 110 is activated: a minimum slip $\lambda_{min}$ or a minimum speed of variation of the parameter $\theta$ representative of an instantaneous torque request like for example a minimum opening speed of the accelerator or of the throttle valve.

The activation conditions can be summarised as follows:

$$activation\ logic: \begin{cases} \lambda > \lambda_{min}(v, \varphi) \\ \quad OR \\ \dfrac{d(\theta)}{dt} > \vec{\theta}(v, \varphi) \end{cases}$$

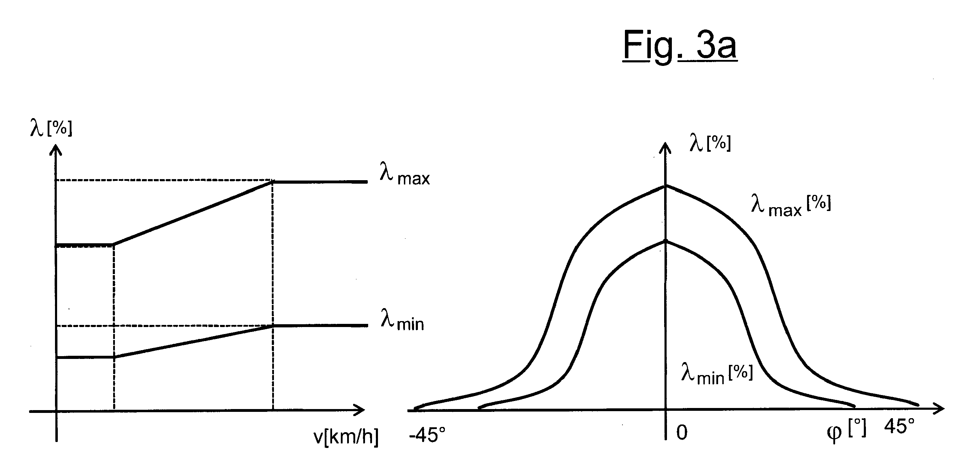

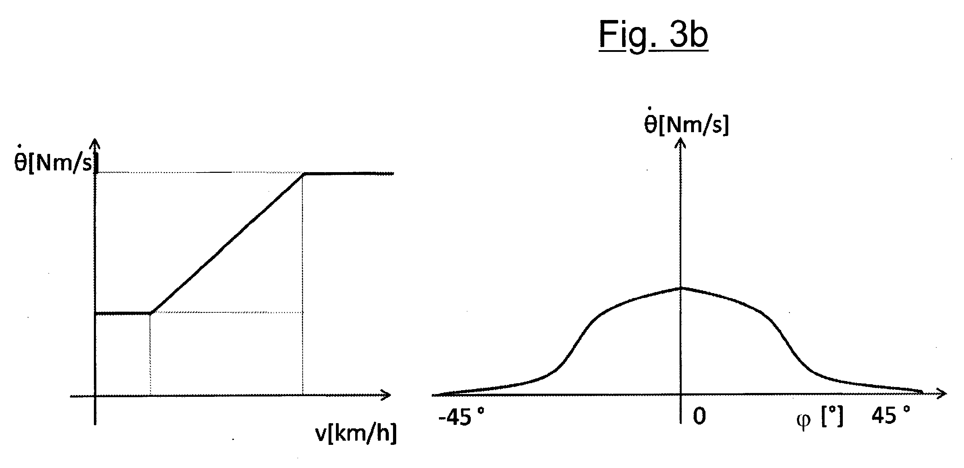

The minimum sliding values $\lambda_{min}$ and of minimum variation of the angular position $\theta$ of the accelerator or of the throttle valve are defined *a priori* through the initial selection of special maps of thresholds, as illustrated in the figures 3a and 3b, which correlate the maximum and minimum slip values allowed and the minimum variation allowed of the angular position $\theta$ of the accelerator or of the throttle valve with the speed v and the rolling angle $\varphi$ at which the vehicle is running.

The use of the opening speed of the accelerator or of the throttle valve as the threshold of activation of the control block 110 in addition to the slip, advantageously makes it possible to advance the intervention of the control system 100 before there is a sudden loss of road grip due to a sudden torque request by the user.

Once one of the two activation conditions has been reached, the instantaneous state of the vehicle is stored in the control block 110.

In particular, at least the instantaneous torque delivered by the motor $\tau_{hold}$, the slip value of the rear wheel $\lambda_{hold}$, the rolling angle $\varphi_{hold}$ of the vehicle and the angular position $\theta_{hold}$ of the accelerator or of the throttle valve are stored.

Part of such values are used by the reference generator 111 of the control block 110 to generate a reference slip $\lambda_0$.

The remaining values are, on the other hand, used to avoid discontinuity at the activation and of the deactivation of the control block 110.

The reference slip $\lambda_0$ is generated based upon a system with two thresholds so as to give a feeling of control over the motor vehicle even when the control block 110 is active.

In particular, the instantaneous values of the angular position $\theta_{hold}$ of the accelerator or of the throttle valve and of the slip $\lambda_{hold}$ upon activation of the control block are used to generate a torque-slip map which correlates the slip with the angular position $\theta$ of the accelerator or of the throttle valve and based upon which each time the reference slip value $\lambda_0$ is identified.

Such a torque-slip map must satisfy the following conditions.

When the accelerator is completely open the slip is equal to the maximum slip allowed for the particular speed and rolling angle at which the motor vehicle is running: $\lambda_0 = \lambda_{max}(v.\varphi)$. The maximum slip value $\lambda_{max}$ can be obtained dependent upon the speed and the rolling angle through the map of the initially chosen thresholds. When the angular opening position $\theta$ of the accelerator or of the throttle valve is equal to the value stored at the activation $\varphi_{hold}$ and the value of the rolling angle $\varphi$ is equal to the initial rolling angle $\varphi_{hold}$, then the reference slip is set equal to the slip value stored at the moment of activation $\lambda_0 = \lambda_{hold}$, so as to ensure continuity of the control action at the moment of ignition of the system 100 for controlling the traction.

When the angular opening position $\theta$ of the accelerator or of the throttle valve is zero, then the reference slip $\lambda_0$ is set equal to zero.

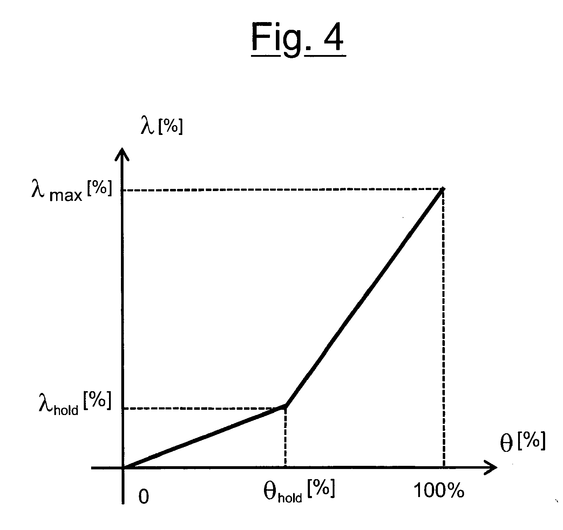

Figure 4 illustrates a non limiting example embodiment of a map that satisfies the indicated conditions.

A reference generator 111 which uses such a map to determine the reference slip $\lambda_0$ allows the user to control the slip by acting upon the accelerator. In particular, when the accelerator is completely open, the user is requesting the maximum acceptable slip $\lambda_{max}$ for the speed v and the rolling angle $\varphi$ at which the vehicle is running.

The reference slip $\lambda_0$ is compared with an estimated slip value $\lambda_s$ obtained by means of the slip reconstructor 113.

The slip $\lambda$ of a wheel of the motor vehicle 120 is defined as follows:

$$\lambda = \frac{\omega r - v}{\omega r}$$

in which $\omega$ is the rotational speed of the analysed wheel of the motor vehicle, r is the instantaneous radius of such a wheel and v is the longitudinal speed of the vehicle measured at its own centre of mass.

The instantaneous radius r of the wheel depends upon the rolling angle $\varphi$ and upon a vertical load to which the motor vehicle is subjected.

Therefore, the estimation of the instantaneous slip $\lambda_s$ by means of the slip reconstructor 113 preferably takes into account, in an inventive manner, the rotational speed $\omega_f$, $\omega_r$ of the front and rear wheels, the stroke of the front and rear suspensions $x_f$, $x_r$, the longitudinal acceleration $a$ and the rolling angle $\varphi$ of the vehicle. Such measurements are detected through the plurality of sensors 122 foreseen on the motor vehicle 120. Basically, a nominal slip value is calculated based upon the rotational speed $\omega_f$, $\omega_r$ of the front and rear wheels and the nominal value of the radius r of the wheels.

The nominal slip value subsequently corrected by means of a processing of the remaining measurements so as to correct the nominal radius in a way such as to approximate it as much as possible to the value of the actual instantaneous radius, also taking into account the influence of the longitudinal acceleration $a$ on the longitudinal speed of the vehicle in its centre of mass and on the load transfer.

Such an instantaneous estimation of the instantaneous slip value $\lambda_s$ makes it possible to have a reliable system which is able to operate even without one or more of the measurements used for the correction of the nominal slip.

In such a case, a less precise estimation of the slip will be obtained, but in any case it can be used for controlling the traction.

The closed loop controller 112 determines the first component $\tau_{CL}$ of the torque requested to the motor 121 based upon the difference between the reference slip $\lambda_0$ and the estimated slip value $\lambda_s$.

In the case in which the estimated slip $\lambda_s$ is lower than the reference slip $\lambda_0$, a greater torque shall be requested to the motor. Similarly, in the case in which the estimated slip $\lambda_s$ is greater than the reference slip $\lambda_0$, a lower torque shall be requested to the motor.

Moreover, the measurement of the speed v of the vehicle is used to modify the calibration of the closed loop controller 112 and the mixing parameter $\mu$.

In particular, the singularities of the controller 112 are moved in high frequency as the speed v increases. The calibration of the controller is also influenced by the gear inserted. In particular, the gain of the controller is modified so as to compensate the variations due to different transmission ratios.

In order to avoid discontinuity in the torque requested to the motor 121, the first component $\tau_{CL}$ of the torque determined by the closed loop controller 112 is added to the torque $\tau_{hold}$ that the motor 121 was exerting the moment the control system 100 was activated. Moreover, the first component $\tau_{CL}$ of the torque is set equal to zero every time the closed loop controller 112 is activated.

In addition to the torque $\tau_{CL}$ request determined by the closed loop controller 112, the feedforward controller 114 determines the second torque component $\tau_{OL}$ to be requested to the motor 121.

Such a first $\tau_{CL}$ and second $\tau_{OL}$ torque components to be requested to the motor 121 have a greater or lower impact upon the total torque $\tau_0$ request as a function of the mixing parameter $\mu$ which is used to weigh the frequency of the two components.

In particular, the mixing parameter $\mu$ is used to modify the band of the closed loop control system 112 and the reaction speed of the feedforward component 114. Specifically, if $\mu = 1$, the bandwidth of the closed loop control system has a maximum value, whereas the feedforward control term is highly filtered. In such a configuration, the control of the traction of the motor vehicle mainly occurs in a closed loop ensuring a high level of reliability, but being able to be, on some vehicles, slow in following the slip reference. Otherwise, if $\mu = 0$, the bandwidth of the closed loop control system has a minimum value, whereas the feedforward control has a slightly filtered action. In such a configuration the motor vehicle behaves like a generic two-wheeled vehicle driven in torque.

By modifying the value of the mixing parameter $\mu$, it is possible to obtain optimal mixtures in frequency of the component $\tau_{CL}$ deriving from the closed loop control and of the component $\tau_{OL}$ deriving from the feedforward control.

The value of the mixing parameter $\mu$ can depend upon the selection carried out by the user through the user interface 140, on the speed v of the vehicle as well as on the rolling angle $\varphi$.

Finally, the control block 110 is kept active carrying out the adjustment of the torque requested $\tau_0$ to the motor 121 to when the torque requested by the user through the conventional system for controlling the motor illustrated previously is maintained greater than the torque requested from the system for controlling the traction 100 according to the present invention.

Otherwise, the control block 110 is deactivated.

From the description made the characteristics of the system and method for controlling traction in a two-wheeled vehicle object of the present invention should be clear, just as the relative advantages should also be clear.

Indeed, the method for controlling traction in a two-wheeled vehicle, operating a generation of a variable reference slip value as a function of a parameter representative of a torque request from a user, allows the user to control the slip and does not act to merely limit it.

Moreover, by determining the reference value of the slip through the maps which correlate the slip with both the speed of the vehicle, and the rolling angle at which the vehicle is, is able to ensure a high level of stability of the vehicle whilst still offering the best performance that can be achieved dependent upon the particular driving condition.

Moreover, the instantaneous slip value is estimated in a precise manner making the entire closed-loop control particularly sturdy.

Last but not least, thanks to the feedforward control component, the system is able to offer a rapid reaction whilst still being able to adapt to the instantaneous conditions of the vehicle and of the road surface. Finally, it should be clear, that the system and the method for controlling traction in a two-wheeled vehicle thus conceived can undergo numerous modifications and variants, all covered by the invention; moreover, all the details can be replaced by technically equivalent elements.

## Claims

1. Method for controlling traction in a two-wheeled vehicle (120) comprising a torque controlled motor (121) and a plurality of sensors (122) for instantaneously measuring driving parameters $(v, \varphi, \theta, \omega, x, a, RPM, gear)$ of said vehicle (120), the method comprising the steps of:

   - determining a reference slip value $(\lambda_0)$ as a function of a parameter $(\theta)$ representative of a torque request from a user, said parameter $(\theta)$ representative of a torque request being detected by means of said plurality of sensors (122);
   - estimating an instantaneous slip value $(\lambda_S)$;
   - determining a first component $(T_{CL})$ of a requested torque signal to said motor (121) based on the difference between said reference slip value $(\lambda_0)$ and said instantaneous slip value $(\lambda_s)$;

   **characterised in that** said reference slip value $(\lambda_0)$ is determined by means of a torque-slip map correlating said parameter $(\theta)$, representative of a torque request, with a slip $(\lambda)$, said couple-slip map varying as a function of a longitudinal speed $(v)$ and a rolling angle $(\varphi)$ of said two-wheeled vehicle (120) detected by means of said plurality of sensors (122).

2. Method for controlling traction in a two-wheeled vehicle (120) according to claim 1, **characterised in that** it comprises the steps of recording an initial slip value $(\lambda_{hold})$, an initial value of said rolling angle $(\varphi_{hold})$ and an initial value of said parameter $(\theta_{hold})$ representative of a torque request characterising said vehicle (120) upon activating the traction control; said torque-slip map satisfying the following conditions:

   - said reference slip value $(\lambda_0)$ corresponds to a maximum slip value $(\lambda_{max})$ allowed for said longitudinal speed $(v)$ and said rolling angle $(\varphi)$, when said parameter $(\theta)$ representative of a

torque request presents a maximum value;
   - said reference slip value $(\lambda_0)$ corresponds to said initial slip value $(\lambda_{hold})$, when said parameter $(\theta)$ representative of a torque request corresponds to said initial value of said parameter $(\theta_{hold})$ representative of a torque request and when said rolling angle $(\varphi)$ corresponds to said initial value of said rolling angle $(\varphi_{hold})$; and
   - said reference slip value $(\lambda_0)$ equals zero, when said parameter $(\theta)$ representative of a torque request equals zero.

3. Method for controlling traction in a two-wheeled vehicle (120) according to claim 2, **characterised in that** said maximum slip value $(\lambda_{max})$ is chosen based on a first plurality of maps of thresholds defining a maximum slip value $(\lambda_{max})$ and a minimum slip value $(\lambda_{min})$ as a function of said longitudinal speed $(v)$ and said rolling angle $(\varphi)$.

4. Method for controlling traction in a two-wheeled vehicle (120) according to claim 3, **characterised in that** it comprises a step of checking at least one activation condition of the traction control, said at least one activation condition being that of exceeding a minimum slip $(\lambda_{min})$ chosen based on said first plurality of maps of thresholds, or a minimum speed of variation of said parameter $(\theta)$ representative of a torque request from a user chosen based on a second plurality of maps of thresholds defining a minimum variation speed value of said parameter $(\theta)$ representative of a torque request from a user as a function of said longitudinal speed $(v)$ and of said rolling angle $(\varphi)$.

5. Method for controlling traction in a two-wheeled vehicle (120) according to one of the preceding claims **characterised in that** said parameter $(\theta)$ representative of a torque request is the opening angular position of an accelerator of said vehicle (120) or of a throttle valve of said vehicle (120).

6. Method for controlling traction in a two-wheeled vehicle (120) according to anyone of the preceding claims, **characterised in that** said step of estimating an instantaneous slip value $(\lambda_s)$ consists of calculating a nominal slip value based on a rotational speed $(\omega_f, \omega_r)$ of a front wheel and a rear wheel of said vehicle (120) detected by said plurality of sensors (122) and a nominal value of radius $(r)$ of said wheels, and correcting said nominal slip value based on at least one of the measurements detected by means of said plurality of sensors (122) comprising:

   - a stroke of a front suspension $(x_f)$ of said vehicle (120);
   - a stroke of a rear suspension $(x_r)$ of said vehicle (120);

- a longitudinal acceleration (a) of said vehicle (120);
- said rolling angle ($\varphi$) of said vehicle (120).

7. Method for controlling traction in a two-wheeled vehicle (120) according to anyone of the preceding claims, **characterised in that** it comprises a step of determining a second component ($\tau_{OL}$) of a requested torque signal to said motor (121) based on at least one of said parameter ($\theta$) representative of a torque request from a user, said longitudinal speed (v), said rolling angle ($\varphi$) and a motor speed (RPM) detected by means of said plurality of sensors (122).

8. Method for controlling traction in a two-wheeled vehicle (120) according to claim 7 **characterised in that** said first component ($\tau_{CL}$) of a torque signal and said second component ($\tau_{OL}$) of a torque signal are added to a torque signal ($\tau_{hold}$) corresponding to the torque requested to said motor (121) upon activating the traction control.

9. Method for controlling traction in a two-wheeled vehicle (120) according to one of claims 7 or 8, **characterised in that** said first component ($\tau_{CL}$) of a torque signal and said second component ($\tau_{OL}$) of a torque signal are frequency-mixed through a mixing parameter ($\mu$) adapted to filter to a greater extent a first component of said two components of a torque signal ($\tau_{CL}$, $\tau_{OL}$) with respect to the other.

10. System (100) for controlling traction in a two-wheeled vehicle (120), said two-wheeled vehicle (120) comprising a torque controlled motor (121) and a plurality of sensors (122) for instantaneously measuring driving parameters (v,$\varphi$,$\theta$,$\omega$,x,a,RPM,gear) of said vehicle (120), said system (100) comprising a control block (110) coupled to said motor (121) in order to provide a signal (To) corresponding to a requested torque as an input to said motor (121), said control block (110) being connected as an input to said plurality of sensors (122), said control block (110) comprising a closed loop controller (112) adapted to determine a first component ($\tau_{CL}$) of said signal ($\tau_0$) corresponding to a requested torque, connected as an input to a slip reconstructor (113) for estimating an instantaneous slip ($\lambda_S$) and to a reference generator (111) for generating a reference slip ($\lambda_0$), **characterised in that** said reference generator (111) is adapted to determine a reference slip ($\lambda_0$) based on a torque-slip map correlating a parameter ($\theta$) representative of a torque request detected my means of said plurality of sensors (122) with a slip ($\lambda$), said torque-slip map varying as a function of a longitudinal speed (v) and a rolling angle ($\varphi$) detected by means of said plurality of sensors (122).

11. System (100) for controlling traction in a two-wheeled vehicle (120) according to claim 10 **characterised in that** said slip reconstructor (113) is connected as an input to said plurality of sensors (122) in order to estimate said instantaneous slip ($\lambda_S$) by determining a nominal slip value based on a speed of rotation ($\omega_f$,$\omega_r$) of a front wheel and of a rear wheel of said vehicle (120) detected by means of said plurality of sensors (122) and a nominal value of radius (r) of said wheels, and by correcting said nominal slip value based on at least one of the measurements detected by means of said plurality of sensors (122) comprising:

- a stroke of a front suspension ($x_f$) of said vehicle (120);
- a stroke of a rear suspension ($x_r$) of said vehicle (120);
- a longitudinal acceleration (a) of said vehicle (120);
- said rolling angle ($\varphi$) of said vehicle (120).

12. System (100) for controlling traction in a two-wheeled vehicle (120) according to claim 10 or 11 **characterised in that** it comprises at least one feedforward controller (114) adapted to determine a second component ($\tau_{OL}$) of said signal ($\tau_0$) corresponding to a torque requested based on a plurality of instantaneous driving parameters of said vehicle (120) detected by means of said plurality of sensors (122).

13. System (100) for controlling traction in a two-wheeled vehicle (120) according to claim 12 **characterised in that** the action of said closed loop controller (112) and said feedforward controller (114) is mixed through a mixing parameter ($\mu$) adapted to modify the bandwidth of the same.

14. System (100) for controlling traction in a two-wheeled vehicle (120) according to one of claims 10 to 13 **characterised in that** it comprises a supervision block (130) adapted to manage the activation of said control block (110) upon exceeding at least one activation parameter comprising a minimum slip value ($\lambda_{min}$) and a minimum variation speed value of said parameter ($\theta$) representative of a torque request from a user.

15. System (100) for controlling traction in a two-wheeled vehicle (120) according to one of claims 10 to 14 **characterised in that** it comprises a user interface (140) comprising a plurality of selectors for setting managing parameters of said control block (110).

**Patentansprüche**

1. Verfahren zur Antriebssteuerung/-regelung in einem zweirädrigen Fahrzeug (120), umfassend einen drehmomentgesteuerten/-geregelten Motor (121) und eine Mehrzahl von Sensoren (122), um Fahrtparameter (v, φ, θ, ω, x, a, RPM, Gang) von dem Fahrzeug (120) momentan zu messen, wobei das Verfahren die Schritte umfasst:

- Bestimmen von einem Referenz-Schlupfwert ($\lambda_0$) als eine Funktion von einem Parameter (θ), der repräsentativ für eine Drehmomentanforderung eines Benutzers ist, wobei der für eine Drehmomentanforderung repräsentative Parameter (θ) vermittels der Mehrzahl von Sensoren (122) erfasst wird,
- Abschätzen von einem momentanen Schlupfwert ($\lambda_S$),
- Bestimmen von einer ersten Komponente ($\tau_{CL}$) von einem angeforderten Drehmomentsignal für den Motor (121) auf Basis der Differenz zwischen dem Referenz-Schlupfwert ($\lambda_0$) und dem momentanen Schlupfwert ($\lambda_S$),

**dadurch gekennzeichnet, dass** der Referenz-Schlupfwert ($\lambda_0$) vermittels eines Drehmoment-Schlupf-Kennfeldes bestimmt wird, welches den für eine Drehmomentanforderung repräsentativen Parameter (θ) mit einem Schlupf (λ) korreliert, wobei das Moment-Schlupf-Kennfeld als eine Funktion von einer longitudinalen Geschwindigkeit (v) und einem Rollwinkel (φ) von dem zweirädrigen Fahrzeug (120) variiert, die von der Mehrzahl von Sensoren (122) erfasst werden.

2. Verfahren zur Antriebssteuerung/-regelung in einem zweirädrigen Fahrzeug (120) nach Anspruch 1, **dadurch gekennzeichnet, dass** es die Schritte umfasst, einen anfänglichen Schlupfwert ($\lambda_{hold}$), einen anfänglichen Wert von dem Rollwinkel ($\varphi_{hold}$) und einen anfänglichen Wert von dem für eine Drehmomentanforderung repräsentativen Parameter ($\theta_{hold}$) aufzuzeichnen, welche das Fahrzeug (120) charakterisieren, bei einem Aktivieren der Antriebssteuerung/-regelung, wobei das Drehmoment-Schlupf-Kennfeld die folgenden Bedingungen erfüllt:

- der Referenz-Schlupfwert ($\lambda_0$) entspricht einem maximalen Schlupfwert ($\lambda_{max}$), der für die longitudinale Geschwindigkeit (v) und den Rollwinkel (φ) erlaubt ist, wenn der für eine Drehmomentanforderung repräsentative Parameter (θ) einen maximalen Wert annimmt,
- der Referenz-Schlupfwert ($\lambda_0$) entspricht dem anfänglichen Schlupfwert ($\lambda_{hold}$), wenn der für eine Drehmomentanforderung repräsentative Parameter (θ) dem anfänglichen Wert von dem für eine Drehmomentanforderung repräsentativen Parameter ($\theta_{hold}$) entspricht, und wenn der Rollwinkel (φ) dem anfänglichen Wert von dem

Rollwinkel ($\varphi_{hold}$) entspricht, und
- der Referenz-Schlupfwert ($\lambda_0$) ist gleich Null, wenn der für eine Drehmomentanforderung repräsentative Parameter (θ) gleich Null ist.

3. Verfahren zur Antriebssteuerung/-regelung in einem zweirädrigen Fahrzeug (120) nach Anspruch 2, **dadurch gekennzeichnet, dass** der maximale Schlupfwert ($\lambda_{max}$) auf Basis von einer ersten Mehrzahl von Kennfeldern von Schwellenwerten ausgewählt wird, die einen maximalen Schlupfwert ($\lambda_{max}$) und einen minimalen Schlupfwert ($\lambda_{min}$) als eine Funktion von der longitudinalen Geschwindigkeit (v) und dem Rollwinkel (φ) definieren.

4. Verfahren zur Antriebssteuerung/-regelung in einem zweirädrigen Fahrzeug (120) nach Anspruch 3, **dadurch gekennzeichnet, dass** es einen Schritt umfasst, wenigstens eine Aktivierungsbedingung der Antriebssteuerung/-regelung zu überprüfen, wobei die wenigstens eine Aktivierungsbedingung darin besteht, dass ein minimaler Schlupf ($\lambda_{min}$) überstiegen wird, der ausgewählt ist auf Basis von der ersten Mehrzahl von Kennfeldern von Schwellenwerten, oder dass eine minimale Variationsgeschwindigkeit von dem für eine Drehmomentanforderung eines Benutzers repräsentativen Parameter (θ) überstiegen wird, die ausgewählt ist auf Basis einer zweiten Mehrzahl von Kennfeldern von Schwellenwerten, welche eine minimale Variationsgeschwindigkeitswert von dem für eine Drehmomentanforderung eines Benutzers repräsentativen Parameter (θ) als eine Funktion der longitudinalen Geschwindigkeit (v) und des Rollwinkels (φ) definieren.

5. Verfahren zur Antriebssteuerung/-regelung in einem zweirädrigen Fahrzeug (120) nach einem der vorhergehenden Ansprüche, **dadurch gekennzeichnet, dass** der für eine Drehmomentanforderung repräsentative Parameter (θ) die Öffnungs-Winkelposition von einem Gaspedal/Gashebel des Fahrzeugs (120) oder von einem Drosselventil des Fahrzeugs (120) ist.

6. Verfahren zur Antriebssteuerung/-regelung in einem zweirädrigen Fahrzeug (120) nach einem der vorhergehenden Ansprüche, **dadurch gekennzeichnet, dass** der Schritt des Abschätzens eines momentanen Schlupfwertes ($\lambda_S$) darin besteht, einen nominellen Schlupfwert auf Basis von einer Rotationsgeschwindigkeit ($\omega_f$, $\omega_r$) von einem Vorderrad und einem Hinterrad des Fahrzeugs (120), die durch die Mehrzahl von Sensoren (122) erfasst werden, und auf Basis von einem nominellen Wert des Radius (r) der Räder zu berechnen, und den nominellen Schlupfwert auf Basis von wenigstens einer der Messungen zu korrigieren, die durch die Mehrzahl von Sensoren (122) erfasst werden, umfassend:

- einen Federweg von einer vorderen Aufhängung ($x_f$) von dem Fahrzeug (120),
- einen Federweg von einer hinteren Aufhängung ($x_r$) von dem Fahrzeug (120),
- eine Längsbeschleunigung (a) von dem Fahrzeug (120),
- den Rollwinkel ($\varphi$) von dem Fahrzeug (120).

7. Verfahren zur Antriebssteuerung/-regelung in einem zweirädrigen Fahrzeug (120) nach einem der vorhergehenden Ansprüche, **dadurch gekennzeichnet, dass** es einen Schritt umfasst, eine zweite Komponente ($\tau_{OL}$) von einem angeforderten Drehmomentsignal für den Motor (121) zu bestimmen, auf Basis von wenigstens einem von dem für eine Drehmomentanforderung eines Benutzers repräsentativen Parameter ($\theta$), der longitudinalen Geschwindigkeit (v), dem Rollwinkel ($\varphi$) und einer Motordrehzahl (RPM), die vermittels der Mehrzahl von Sensoren (122) erfasst werden.

8. Verfahren zur Antriebssteuerung/-regelung in einem zweirädrigen Fahrzeug (120) nach Anspruch 7, **dadurch gekennzeichnet, dass** die erste Komponente ($\tau_{CL}$) eines Drehmomentsignals und die zweite Komponente ($\tau_{OL}$) eines Drehmomentsignals zu einem Drehmomentsignal ($\tau_{hold}$) addiert werden, welches dem für den Motor (121) bei Aktivierung der Antriebssteuerung/-regelung angeforderten Drehmoment entspricht.

9. Verfahren zur Antriebssteuerung/-regelung in einem zweirädrigen Fahrzeug (120) nach einem von Ansprüchen 7 oder 8, **dadurch gekennzeichnet, dass** die erste Komponente ($T_{CL}$) von einem Drehmomentsignal und die zweite Komponente ($\tau_{TOL}$) von einem Drehmomentsignal durch einen Mischparameter ($\mu$) Frequenzgemischt werden, der dazu ausgelegt ist, eine erste Komponente von den zwei Komponenten eines Drehmomentsignals ($\tau_{CL}$, $\tau_{OL}$) in Bezug auf die andere stärker zu filtern.

10. System (100) zur Antriebssteuerung/-regelung in einem zweirädrigen Fahrzeug (120), wobei das zweirädrige Fahrzeug (120) einen drehmomentgesteuerten/-geregelten Motor (121) und eine Mehrzahl von Sensoren (122) aufweist, um Fahrtparameter (v, $\varphi$, $\theta$, $\omega$, x, a, RPM, Gang) von dem Fahrzeug (120) momentan zu messen, wobei das System (100) einen mit dem Motor (121) gekoppelten Steuer-/Regelblock (110) umfasst, um ein Signal ($\tau_0$) zu liefern, welches einem angeforderten Drehmoment entspricht, als eine Eingabe für den Motor (121), wobei der Steuer-/Regelblock (110) als eine Eingabe mit der Mehrzahl von Sensoren (122) verbunden ist, wobei der Steuer-/Regelblock (110) einen Closed-Loop-Regler (112) umfasst, der dazu ausgebildet ist, eine erste Komponente ($\tau_{CL}$) von dem Signal ($\tau_0$),

welches einem angeforderten Drehmoment entspricht, zu bestimmen, verbunden als eine Eingabe mit einer Schlupf-Rekonstruktionseinrichtung (113), um einen momentanen Schlupf ($\lambda_S$) abzuschätzen, und mit einem Referenz-Generator (111) zum Erzeugen eines Referenz-Schlupfes ($\lambda_0$), **dadurch gekennzeichnet, dass** der Referenz-Generator (111) dazu ausgebildet ist, einen Referenz-Schlupf ($\lambda_0$) zu bestimmen auf Basis von einem Drehmoment-Schlupf-Kennfeld, welches einen für eine Drehmomentanforderung repräsentativen Parameter ($\theta$), der vermittels der Mehrzahl von Sensoren (122) detektiert wird, mit einem Schlupf ($\lambda$) korreliert, wobei das Drehmoment-Schlupf-Kennfeld als eine Funktion von einer longitudinalen Geschwindigkeit (v) und einem Rollwinkel ($\varphi$) variiert, die vermittels der Mehrzahl von Sensoren (122) erfasst werden.

11. System (100) zur Antriebssteuerung/-regelung in einem zweirädrigen Fahrzeug (120) gemäß Anspruch 10, **dadurch gekennzeichnet, dass** die Schlupf-Rekonstruktionseinrichtung (113) als eine Eingabe mit der Mehrzahl von Sensoren (122) verbunden ist, um den momentanen Schlupf ($\lambda_S$) abzuschätzen, indem ein nomineller Schlupfwert auf Basis von einer Rotationsgeschwindigkeit ($\omega_f$, $\omega_r$) von einem Vorderrad und einem Hinterrad des Fahrzeugs (120), die durch die Mehrzahl von Sensoren (122) erfasst werden, und auf Basis von einem nominellen Wert des Radius (r) der Räder bestimmt wird, und indem der nominelle Schlupfwert auf Basis von wenigstens einer der Messungen korrigiert wird, die durch die Mehrzahl von Sensoren (122) erfasst werden, umfassend:

- einen Federweg von einer vorderen Aufhängung ($x_f$) von dem Fahrzeug (120),
- einen Federweg von einer hinteren Aufhängung ($x_r$) von dem Fahrzeug (120),
- eine Längsbeschleunigung (a) von dem Fahrzeug (120),
- den Rollwinkel ($\varphi$) von dem Fahrzeug (120).

12. System (100) zur Antriebssteuerung/-regelung in einem zweirädrigen Fahrzeug (120) nach Anspruch 10 oder 11, **dadurch gekennzeichnet, dass** es wenigstens eine Feedforward-Steuereinrichtung (114) umfasst, die dazu ausgebildet ist, eine zweite Komponente ($\tau_{OL}$) von dem Signal ($\tau_0$) zu bestimmen, welches einer Drehmomentanforderung entspricht, auf Basis von einer Mehrzahl von momentanen Fahrtparametern des Fahrzeuges (120), die vermittels der Mehrzahl von Sensoren (122) erfasst werden.

13. System (100) zur Antriebssteuerung/-regelung in einem zweirädrigen Fahrzeug (120) nach Anspruch 12, **dadurch gekennzeichnet, dass** die Wirkung von dem Closed-Loop-Regler (112) und der Feedforward-Steuereinrichtung (114) durch einen Mischparameter (μ) gemischt wird, der dazu ausgelegt ist, die Bandbreite davon zu modifizieren.

14.  System (100) zur Antriebssteuerung/-regelung in einem zweirädrigen Fahrzeug (120) nach einem von Ansprüchen 10 bis 13, **dadurch gekennzeichnet, dass** es einen Überwachungsblock (130) umfasst, der dazu ausgebildet ist, die Aktivierung von dem Steuer-/Regelblock (110) beim Überschreiten von wenigstens einem Aktivierungsparameter zu verwalten, umfassend einen minimalen Schlupfwert ($\lambda_{min}$) und einen minimalen Variationsgeschwindigkeitswert des für eine Drehmomentanforderung von einem Benutzer repräsentativen Parameters (θ).

15.  System (100) zur Antriebssteuerung/-regelung in einem zweirädrigen Fahrzeug (120) nach einem von Ansprüchen 10 bis 14, **dadurch gekennzeichnet, dass** es eine Benutzerschnittstelle (140) umfasst, welche eine Mehrzahl von Auswahleinrichtungen umfasst, um Verwaltungsparameter für den Steuer-/Regelblock (110) einzustellen.


**Revendications**

1.  Procédé de commande de traction dans un véhicule à deux roues (120) comprenant un moteur commandé en couple (121) et une pluralité de capteurs (122) pour mesurer instantanément des paramètres d'entraînement (v, φ, θ, ω, x, a, RPM, gear) dudit véhicule (120), le procédé comprenant les étapes :

    - de détermination d'une valeur de dérapage de référence ($\lambda_0$) en fonction d'un paramètre (θ) représentatif d'une demande de couple provenant d'un utilisateur, ledit paramètre (θ) représentatif d'une demande de couple étant détecté au moyen de ladite pluralité de capteurs (122) ;
    - d'estimation d'une valeur de dérapage instantané ($\lambda_S$) ;
    - de détermination d'une première composante ($\tau_{CL}$) d'un signal de couple demandé au dit moteur (121) sur la base de la différence entre ladite valeur de dérapage de référence ($\lambda_0$) et ladite valeur de dérapage instantané ($\lambda_S$) ;

    **caractérisé en ce que** ladite valeur de dérapage de référence ($\lambda_0$) est déterminée au moyen d'une carte couple-dérapage corrélant ledit paramètre (θ) représentatif d'une demande de couple avec un dérapage (λ), ladite carte couple-dérapage variant en fonction d'une vitesse longitudinale (v) et d'un angle de roulis (φ) dudit véhicule à deux roues (120) détectés au moyen de ladite pluralité de capteurs (122).

2.  Procédé de commande de traction dans un véhicule à deux roues (120) selon la revendication 1, **caractérisé en ce qu'**il comprend les étapes d'enregistrement d'une valeur de dérapage initiale ($\lambda_{hold}$), d'une valeur initiale dudit angle de roulis ($\varphi_{hold}$) et d'une valeur initiale dudit paramètre ($\theta_{hold}$) représentatif d'une demande de couple caractérisant ledit véhicule (120) lors de l'activation de la commande de traction ; ladite carte couple-dérapage satisfaisant aux conditions suivantes :

    - ladite valeur de dérapage de référence ($\lambda_0$) correspond à une valeur de dérapage maximum ($\lambda_{max}$) autorisée pour ladite vitesse longitudinale (v) et ledit angle de roulis (φ), lorsque ledit paramètre (θ) représentatif d'une demande de couple présente une valeur maximum ;
    - ladite valeur de dérapage de référence ($\lambda_0$) correspond à ladite valeur de dérapage initiale ($\lambda_{hold}$), lorsque ledit paramètre (θ) représentatif d'une demande de couple correspond à ladite valeur initiale dudit paramètre ($\theta_{hold}$) représentatif d'une demande de couple et lorsque ledit angle de roulis (φ) correspond à ladite valeur initiale dudit angle de roulis ($\varphi_{hold}$) ; et
    - ladite valeur de dérapage de référence ($\lambda_0$) est égale à zéro, lorsque ledit paramètre (θ) représentatif d'une demande de couple est égal à zéro.

3.  Procédé de commande de traction dans un véhicule à deux roues (120) selon la revendication 2, **caractérisé en ce que** ladite valeur de dérapage maximum ($\lambda_{max}$) est choisie sur la base d'une première pluralité de cartes de seuils définissant une valeur de dérapage maximum ($\lambda_{max}$) et une valeur de dérapage minimum ($\lambda_{min}$) en fonction de ladite vitesse longitudinale (v) et dudit angle de roulis (φ).

4.  Procédé de commande de traction dans un véhicule à deux roues (120) selon la revendication 3, **caractérisé en ce qu'**il comprend une étape de vérification d'au moins une condition d'activation de la commande de traction, ladite au moins une condition d'activation étant celle de dépassement d'un dérapage minimum ($\lambda_{min}$) choisi sur la base de ladite première pluralité de cartes de seuils, ou d'une vitesse minimum de variation dudit paramètre (θ) représentatif d'une demande de couple provenant d'un utilisateur choisie sur la base d'une deuxième pluralité de cartes de seuils définissant une valeur de vitesse de variation minimum dudit paramètre (θ) représentatif d'une demande de couple provenant d'un utilisateur en fonction de ladite vitesse longitudinale (v) et dudit angle de roulis (φ).

5.  Procédé de commande de traction dans un véhicule à deux roues (120) selon l'une des revendications précédentes, **caractérisé en ce que** ledit paramètre ($\theta$) représentatif d'une demande de couple est la position angulaire d'ouverture d'un accélérateur dudit véhicule (120) ou d'un papillon des gaz dudit véhicule (120).

6. Procédé de commande de traction dans un véhicule à deux roues (120) selon l'une quelconque des revendications précédentes, **caractérisé en ce que** ladite étape d'estimation d'une valeur de dérapage instantané ($\lambda_S$) consiste en le calcul d'une valeur de dérapage nominale sur la base d'une vitesse de rotation ($\omega_f$, $\omega_r$) d'une roue avant et d'une roue arrière dudit véhicule (120) détectée par ladite pluralité de capteurs (122) et d'une valeur nominale de rayon (r) desdites roues, et la correction de ladite valeur de dérapage nominale sur la base d'au moins l'une des mesures détectées au moyen de ladite pluralité de capteurs (122) comprenant :

> - une course d'une suspension avant ($x_f$) dudit véhicule (120) ;
> - une course d'une suspension arrière ($x_r$) dudit véhicule (120) ;
> - une accélération longitudinale (a) dudit véhicule (120) ;
> - ledit angle de roulis ($\varphi$) dudit véhicule (120).

7. Procédé de commande de traction dans un véhicule à deux roues (120) selon l'une quelconque des revendications précédentes, **caractérisé en ce qu'**il comprend une étape de détermination d'une deuxième composante ($\tau_{OL}$) d'un signal de couple demandé au dit moteur (121) sur la base d'au moins l'un dudit paramètre ($\theta$) représentatif d'une demande de couple provenant d'un utilisateur, de ladite vitesse longitudinale (v), dudit angle de roulis ($\varphi$) et d'une vitesse de moteur (RPM) détectés au moyen de ladite pluralité de capteurs (122).

8. Procédé de commande de traction dans un véhicule à deux roues (120) selon la revendication 7, **caractérisé en ce que** ladite première composante ($\tau_{CL}$) d'un signal de couple et ladite deuxième composante ($\tau_{OL}$) d'un signal de couple sont ajoutées à un signal de couple ($\tau_{hold}$) correspondant au couple demandé au dit moteur (121) lors de l'activation de la commande de traction.

9. Procédé de commande de traction dans un véhicule à deux roues (120) selon l'une des revendications 7 ou 8, **caractérisé en ce que** ladite première composante ($\tau_{CL}$) d'un signal de couple et ladite deuxième composante ($\tau_{OL}$) d'un signal de couple sont mélangées en fréquence par un paramètre de mélange (p) conçu pour filtrer dans une plus grande mesure une première composante desdites deux composantes d'un signal de couple ($\tau_{CL}$, $\tau_{OL}$) que l'autre.

10. Système (100) de commande de traction dans un véhicule à deux roues (120), ledit véhicule à deux roues (120) comprenant un moteur commandé en couple (121) et une pluralité de capteurs (122) pour mesurer instantanément des paramètres de commande (v, $\varphi$, $\theta$, $\omega$, x, a, RPM, gear) dudit véhicule (120), ledit système (100) comprenant un bloc de commande (110) couplé au dit moteur (121) afin de fournir un signal ($\tau_0$) correspondant à un couple demandé en tant qu'entrée vers ledit moteur (121), ledit bloc de commande (110) étant connecté en tant qu'entrée à ladite pluralité de capteurs (122), ledit bloc de commande (110) comprenant un contrôleur de boucle fermée (112) conçu pour déterminer une première composante ($\tau_{CL}$) dudit signal ($\tau_0$) correspondant à un couple demandé, connecté en tant qu'entrée à un reconstructeur de dérapage (113) pour estimer un dérapage instantané ($\lambda_S$) et à un générateur de référence (111) pour générer un dérapage de référence ($\lambda_0$), **caractérisé en ce que** ledit générateur de référence (111) est conçu pour déterminer un dérapage de référence ($\lambda_0$) sur la base d'une carte couple-dérapage corrélant un paramètre ($\theta$) représentatif d'une demande de couple détectée au moyen de ladite pluralité de capteurs (122) avec un dérapage ($\lambda$), ladite carte couple-dérapage variant en fonction d'une vitesse longitudinale (v) et d'un angle de roulis ($\varphi$) détectés au moyen de ladite pluralité de capteurs (122).

11. Système (100) de commande de traction dans un véhicule à deux roues (120) selon la revendication 10, **caractérisé en ce que** ledit reconstructeur de dérapage (113) est connecté en tant qu'entrée à ladite pluralité de capteurs (122) afin d'estimer ledit dérapage instantané ($\lambda_S$) en déterminant une valeur de dérapage nominale sur la base d'une vitesse de rotation ($\omega_f$, $\omega_r$), d'une roue avant et d'une roue arrière dudit véhicule (120) détectée au moyen de ladite pluralité de capteurs (122) et une valeur nominale de rayon (r) desdites roues, et en corrigeant ladite valeur de dérapage nominale sur la base d'au moins l'une des mesures détectées au moyen de ladite pluralité de capteurs (122) comprenant :

> - une course d'une suspension avant ($x_f$) dudit véhicule (120) ;
> - une course d'une suspension arrière ($x_r$) dudit véhicule (120) ;
> - une accélération longitudinale (a) dudit véhicule (120) ;
> - ledit angle de roulis ($\varphi$) dudit véhicule (120).

12. Système (100) de commande de traction dans un véhicule à deux roues (120) selon la revendication 10 ou 11, **caractérisé en ce qu'**il comprend au moins un contrôleur d'anticipation (114) conçu pour déterminer une deuxième composante ($\tau_{OL}$) dudit

signal ($\tau_0$) correspondant à un couple demandé sur la base d'une pluralité de paramètres de commande instantanée dudit véhicule (120) détectés au moyen de ladite pluralité de capteurs (122).

13. Système (100) de commande de traction dans un véhicule à deux roues (120) selon la revendication 12, **caractérisé en ce que** les actions dudit contrôleur de boucle fermée (112) et dudit contrôleur d'anticipation (114) sont mélangées par un paramètre de mélange ($\mu$) conçu pour modifier la bande passante du susdit.

14. Système (100) de commande de traction dans un véhicule à deux roues (120) selon l'une des revendications 10 à 13, **caractérisé en ce qu'**il comprend un bloc de supervision (130) conçu pour gérer l'activation dudit bloc de commande (110) lors du dépassement d'au moins un paramètre d'activation comprenant une valeur de dérapage minimum ($\lambda_{min}$) et une valeur de vitesse de variation minimum dudit paramètre ($\theta$) représentatif d'une demande de couple provenant d'un utilisateur.

15. Système (100) de commande de traction dans un véhicule à deux roues (120) selon l'une des revendications 10 à 14, **caractérisé en ce qu'**il comprend une interface utilisateur (140) comprenant une pluralité de sélecteurs pour déterminer des paramètres de gestion dudit bloc de commande (110).

Fig. 1

## Fig. 2

Fig. 3a

λ [%]

λ_max [%]

λ_min [%]

-45°   0   45°   φ [°]

λ_max

λ_min

λ [%]

v [km/h]

Fig. 3b

# Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 3337155 A1

- IT MI20070559 A